# EUROPEAN PATENT SPECIFICATION

(11) **EP 0 780 949 B1**
(45) Date of publication and mention of the grant of the patent: **20.09.2000**
(21) Application number: 96203733.9
(22) Date of filing: 20.12.1996
(51) Int. Cl.: H02G 15/184, H02G 15/103, H02G 15/068

(54) **Universal cable adapter, cable joint using the adapter and method of making the same**
Universeller Kabeladapter, mit Hilfe des Adapters hergestellte Kabelverbindung sowie Verfahren zur Herstellung derselben
Adaptateur de câble universel, jonction de câble utilisant l'adaptateur et procédé de réalisation de celle-ci

(30) Priority: 23.12.1995 EP 95203627
(43) Date of publication of application: 25.06.1997
(73) Proprietor: MINNESOTA MINING AND MANUFACTURING COMPANY, St. Paul, Minnesota 55133-3427 (US)
(72) Inventor: Freiwald, Frank, 3M Laboratories (Europe) Gmbh, 21082 Hamburg (DE)
(74) Representative: Wilhelm, Stefan

(56) References cited:
- EP-A- 0 063 478
- EP-A- 0 226 393
- EP-A- 0 435 569
- WO-A-92/08265
- DE-U- 9 002 070
- FR-A- 2 369 330
- FR-A- 2 557 390
- US-A- 3 585 274
- US-A- 3 816 640

## Description

The present invention relates to a cable adapter for use in jointing and terminating electrical cables, in particular medium voltage cables for systems with a system voltage greater than or equal to 5 kV, as well as a joint and/or termination including the adapter and a method of making the same.

Cables of the above mentioned type normally include an outer electrostatic screen which may be combined with a metal outer sheath as is known from conventional lead-paper medium voltage, high voltage and super tension cables. When terminating or jointing electric cables with an outer electrostatic screen it is normally required to connect the conductor of the cable to some kind of lug for a termination or to connect it to another conductor for a joint. Whether terminating or jointing, an electrical connection is normally made between the outer electrostatic screen and one of a variety of electrical stress grading devices. In order to do this it is normal to remove the electrostatic screen for a certain distance along the cable thus exposing the insulation of the cable. When making a termination it is normal to apply some covering to the termination to provide anti-tracking protection for indoor use and anti-tracking/weathering protection when the termination is installed outside. When making a joint it is normal to replace the cable insulation over the connector and to continue the outer electrostatic screen over the joint to the electrostatic screen of the other cable.

It is well known in the art that joints and cable terminations can form a weak point in the complete electrical supply system because these cable accessories have to be installed on-site, often under difficult conditions and it is generally not possible to achieve the same electrical standard for the joint or termination which may be expected of the cable which is manufactured under closely controlled factory conditions. One such jointing problem may occur with plastic insulated cables having non-strippable outer electrostatic screens which are removed by use of a longitudinally applied screen scraping or stripping device. Such devices often leave longitudinal grooves or flats which can result in voids in terminations and joints. Longitudinal failure during overvoltage conditions such as lightning impulse or long term failure due to discharge in the void may occur as a result of such defects. Further, there are designs of medium voltage polymeric cable which have sector shaped conductors. Jointing to the sector shaped insulation can be a problem as the flat sides of the sector may even be slightly concave and it is often difficult to prevent voids along these flat portions of the insulation during jointing.

A further problem may occur during jointing or terminating plastic cable which has been in service for some time. Whereas the cable may have had a strippable outer electrostatic screen when it was first installed, the stripability of the screen may change with time and load cycling at higher temperatures such that it is necessary to use a stripping tool to remove it. Depending upon the stripping tool used, the tool may leave defects in the outer surface of the installation which may be longitudinal or helical grooves. According to the instructions for the use of such stripping tools, it is advisable to use abrasive paper or cloth to smooth out the installation after stripping of the outer screen. However, it can not always be relied upon that the jointer will carry out this tedious and arduous task consistently.

Yet another problem may occur when jointing paper or plastic cables to existing paper cables. In this case, it is necessary to make a transition joint between paper insulated cable and plastic insulated cable or possibly between a paper cable of one type and a paper cable of another type. Depending upon the current ratings, as well as the insulation and screen thicknesses of the two cables, considerable differences in dimensions may exist between the existing cable and the new cable. The paper cable may be of the non-draining, e.g. mass impregnated non-draining (MIND) type, where the paper insulation is impregnated with a highly viscous insulating grease which may be of natural or synthetic composition. Alternatively, the cable may be of the draining (M1) type, i.e. the cable is impregnated with a viscous insulating oil. Such cables may have been in the ground for in excess of thirty years before they are jointed and the cable insulation may no longer be in the same condition as when originally manufactured. Particular care is required in completing the termination or joint in order not to damage the cable insulation and it is also advisable to over-insulate the joint or termination to a certain extent in order to guarantee a sufficient further life of the joint. An additional complication may be that there are no records surviving after such a long time as to the exact nature and type of cable which has been installed. This requires of the jointing system that it can accommodate not only different cable diameters but also different cable types and conductor constructions.

There has long been a requirement for a universal cable joint or terminating method, which is capable of being used with cables having round or sector-shaped conductors, having rubber or polymeric insulation, having non-draining or draining paper insulation, and having been produced by different manufacturers.

With paper insulated cable, and particularly with paper insulated cable which has been in service for some time, it is advisable not to apply tapes during jointing. Application of a tape under tension tends to cause the cable core to move backwards and forwards whereby the usual fulcrum of the movement is provided by the lead or aluminium sheath of the cable. This repetitive back- and forwards or circular motion may have the effect of reshuffling the paper tapes such as to produce a soil and spongy insulation or even a gap in the insulation at a position close to the termination of the lead or aluminium sheath. For this reason, when jointing old paper cable, it is advisable to reduce the amount of movement of the cable core to a minimum.

As is also well known in the art, paper cable impregnants, whether grease or oil, may attack certain polymeric materials, making them swell. Further, where the polymeric materials have been loaded with conductive particles in order to make them conductive or stress grading, the conductive or stress grading properties may be lost when exposed to cable oil and grease. Transition joints between paper and polymeric cable often include oil barriers to prevent contact between the paper cable impregnant and the polymeric cable which result in complex joints which are difficult to install.

A heat-shrinkable transition joint is known from GB-2 097 203 for preparing a transition joint between a mass impregnated paper insulated cable and a plastic insulated cable. The mass impregnated oil material of the paper cable is sealed-in by applying a heat-recoverable oil-resistant tubing over the exposed paper insulation. An oil resistant mastic is applied to the conductor connector and onto a portion of the exposed paper insulation. The use of a flame during jointing to install the heat-recoverable tubings has not found favor with all users. Further, the preferred material for the oil-resistant heat-shrinkable tubing is stated to be the material known by the trade name KYNAR, which is a material not easily installed by means of a flame.

Further, heat-shrinkable products do not generate, in general, high radial forces after shrinking. Thus such joints may have a low interfacial impulse break-down strength along the interface between the outer electrostatic screen and the connector of the joint. In order to overcome this problem binding tapes may be applied to secure the paper insulation. As explained above, applying tapes under tension is generally to be avoided.

The oil resistant mastic suitable for use in such a transition joint may be of the type described in US-A-4 378 463. This material shows excellent resistance to the normal cable greases and oils. The water-absorption values for this material, as given in the above mentioned patent are between 0.3 and 23.2% within 24 hours at room temperature. Values at 7 days immersion lie in the range 0.9 to in excess of 24% up to unmeasurable. It is considered possible to produce formulations which have less than a 5% water uptake within 1 month at room temperature. Such high levels of water-absorption may be acceptable when the mastic material is applied to portions of a joint which never come into contact with water but would be considered unsuitable for sealing between components of the joint in areas which may be subjected to water ingress. If such mastics are stored for long periods at high humidities, they can absorb water. It is believed by some, that equilibration of moisture content between the mastic and the paper insulation can occur during load cycling if these mastics are subsequently applied to a significant area of paper insulation. It has been demonstrated that many types of paper cable discharge continuously at normal operating voltage. It has also been demonstrated that the presence of moisture in paper cable insulation can alter the effects of the discharge. It is believed by some that such discharges can be of detriment to the cable and may lead to possible final breakdown.

Another transition joint is known from DE-OS 2601545 which makes use of a wrapped paper roll on the paper insulation side and a polymeric self-amalgamating tape insulation on the polymeric cable side. Between these two is placed an insulating body. Over the outside of the taped plastic insulation is placed an oil-resistant material but no specific formulation of this material is given. The complete joint is complex and consists of many parts which require high-jointing skill for their proper application.

Another transition joint is known from EP-A-508322. The joint includes a long preformed push-on insulating body made from elastomeric material. This must first be pushed on to the polymeric cable side of the joint and then repositioned so that it extends across the connector onto the paper insulation. A paper roll insulation is applied to the paper side of the joint which must be applied in such a way as to produce a stress grading cone. An oil-tight joint casing is then fabricated around the joint and filled with cable jointing oil.

A further transition joint is known from US-A-5 374 784 and 5 408 047. After preparation of the paper cable side, a stress control tape is applied of the end of the lead sheath, the electrostatic core screen and onto a portion of the exposed paper installation. An insulating tube is then installed overlapping the lead sheath and is shrunk down onto the stress control tape and the remaining part of the exposed paper insulation. In order to complete the core preparation an oil resistant heat-shrinkable tube is applied over the whole length of the previously described jointing components. By this procedure the paper cable is converted into a kind of plastic cable and the remaining jointing is similar to that of jointing between two polymeric cables. This type of joint is a an improvement in terms of speed and ease of installation in comparison to the previously described transition joints but still makes use of a considerable number of components as well as the requirement of using heat-shrinkable sleeves.

In the article described "Kaltschrumpfende Kabelgarnituren für Mittelspannungskabel" by Ulrich Böhm, Christophe Brackeniers and Anne CheeneAstorino published in ETZ (Electrotechnische Zeitung) August 1, 1995, pages 18 to 25, a medium voltage polymeric cable termination is described which includes a radially expanded silicone tube coated on the inside by a stress-controlled mastic and held in a radially expanded condition by short and long support cores located inside the silicone tube. The cores may be removed by pulling the support cores in opposite directions longitudinally. Cable joints are referred to but no description of these joints is given.

A cable adapter is known from EP-226 393 which consists of a moulded sleeve, one portion of which is conductive and the other portion of which is insulating. The cable adapter is used to build up the insulation of the cable so that a conventional stress cone joint may be installed. It is recommended to use a permittivity for the material of the insulating part of the cable adapter which is in excess of the permittivity of the polymeric insulating material of the main joint sleeve. It is hoped by choice of the correct permittivity to control the longitudinal stresses in the joint such as to reduce the risk of longitudinal failures within the joint along interfaces between the cable insulation and the cable adapter or between the cable adapter and the main joint sleeve.

A further cable adapter is known from German utility model G 90 02 070.7 comprising a generally cylindrical thin-walled tube-like element made of electrically insulating elastomeric material which has a thin-walled elastomeric semi-condicting end portion at one end thereof and which extends beyond that end. This elastomeric thin-walled tubular product is expanded and supported upon a core. The insulating material is an elastic ethylene propylene rubber with a Shore A hardness of 25 to 45 whereas the semi-conductive end portion has a Shore A hardness of 45 to 65. The adapter of G 90 02 070.7 is less suited, however, for demanding applications such as, for example, for use with cables having sector-shaped conductors or with cables having irregularities in the surface of the insulation.

There has long been a need for a simple method of jointing plastic and paper insulated cables which requires the minimum use of tapes, has a low number of components which are easy to install and which provides a high level of security with respect to longitudinal failures within the joint.

### SUMMARY OF THE INVENTION

The invention includes a tubular cable adapter (10) for use in jointing and/or terminating medium voltage cables, comprising a first elastic insulating tubular member (8), said first elastic insulating tubular member (8) having a substantially smooth outer surface;
a second elastic conductive tubular member (6), and tubular support core means (4) for maintaining the first and second tubular members (6, 8) in a radially expanded state, said tubular core means (4) being removable from said first and second tubular members (6, 8), wherein said first tubular member (8) comprises an outer layer having an outer surface extending substantially parallel to said tubular core means (4), characterized in that said first tubular means (8) further comprises an insulating conformable material (12) interposed between said outer layer and said hollow tubular core means (4).

The invention also refers to a cable adapter (10) for use in jointing and/or terminating medium voltage cables, comprising a first insulating tubular member (8) having a substantially smooth outer surface;
a second elastic conductive tubular member (6), and tubular support core means (4) for maintaining the first and second tubular members (6, 8) in a radially expanded state, said tubular core means (4) being removable from said first and second tubular members (6, 8), wherein said first tubular member (8) has an outer surface extending substantially parallel to said hollow tubular core means (4) characterized in that said first tubular member (8) comprises an insulating elastic and conformable material.

The invention also includes a jointing device for use in jointing medium voltage cables comprising a cable adapter according to the invention and a moulded joint sleeve comprising elastomeric insulating material and an outer conductive layer.

The invention also refers to a method for jointing or terminating a medium voltage cable including the step of installing an adapter according to the invention to prepare the ends of said cable.

The invention also includes a straight joint between two electric cables and a kit of parts for such a joint including the cable adapter. The cable adapter in accordance with the invention may reduce the amount of taping which has to be done in a completion of a joint or termination.

The adapter in accordance with the invention may provide the advantage that a reduced number of components is required during the manufacture of a joint or termination.

The invention may provide the further advantage that the jointing time is reduced.

The cable adapter in accordance with the invention may provide the further advantage that the electrical strength along the interface between the external surface of the cable insulation and the joint insulation may be improved.

The cable adapter in accordance with the present invention may provide the additional advantage that it provides a secure and reliable termination or joint even when there are surface irregularities in the cable installation.

The cable adapter in accordance with the invention may also provide the advantage that it can be used with either polymeric, elastomeric or paper insulated cables.

The cable adapter in accordance with the present invention may also provide the advantage that standard joint insulation sizes may be used for transition joints between paper and plastic cable despite the fact that paper cable is generally smaller in size than the equivalent plastic cable.

The cable adapter of the present invention may also provide the advantage of being suitable for use with sector-shaped cores.

The depending claims define further embodiments of the present invention.

The invention, its embodiments and advantages are described in the following with reference to the drawings.

### BRIEF DESCRIPTION OF THE DRAWINGS

Fig. 1 shows a schematic view of the cable adapter in accordance with a first embodiment of the present invention.

Fig. 2 shows a schematic view of a cable adapter in accordance with a second embodiment in accordance with the present invention.

Fig. 3 shows a schematic view of the cable adapter in accordance with a third embodiment of the present invention.

Fig. 4 shows a schematic view of a cable adapter in accordance with a fourth embodiment in accordance with the present invention.

Fig. 5 shows a schematic view of a cable adapter in accordance with the present invention being installed on the paper cable side of a transition joint.

Fig. 6 shows a detailed view of a the cable adapter in accordance with Fig. 1 installed upon a paper insulated cable.

Fig. 7 shows a schematic view of the remaining joint insulation being installed onto a transition joint using the cable adapter in accordance with the present invention.

Fig. 8 shows a detailed section of the completed joint in accordance with Fig. 7.

Fig. 9 shows a schematic view of a cable adapter with a fifth embodiment of the present invention.

Fig. 10 shows a detail of the cable adapter in accordance with Figure 9.

Fig. 11 shows a cable adapter in accordance with the present invention applied as a partly completed termination.

Fig. 12 shows a cable adapter in accordance with the present invention applied as acompleted termination.

Fig. 13 shows a cross-section through a sector shaped core.

Fig. 14 is a chart showing a comparison of the permanent set of a silicone material and the standard EPDM stored at 40°C and applied at room temperature.

Fig. 15 shows a chart of the comparison of the permanent set of a silicone material and the EPDM at the lowest possible installation temperatures.

Fig. 16 is a chart of the comparison in the permanent set values over time at elevated temperatures, e.g. at temperatures of 40°C and 60°C.

Fig. 17 is a chart showing a comparison in the electrical behavior of semi-conductive silicone materials compared to semi-conductive EPDM.

### DESCRIPTION OF THE ILLUSTRATED EMBODIMENTS

In the following the application of the cable adapter in accordance with the present invention will be described mainly with respect to the preparation of transition joints between paper and plastic insulated cables. The invention is however not limited thereto. A skilled person will readily appreciate that the cable adapter in accordance with the present invention may be used in the preparation of paper cable - paper cable straight joints, plastic cable - plastic cable straight joints as well as paper and plastic cable terminations.

In the figures certain dimensions, in particular the thicknesses of various layers, may be exaggerated in order to improve the clarity of these figures. Thus the exact details of the figures are not limiting to the invention.

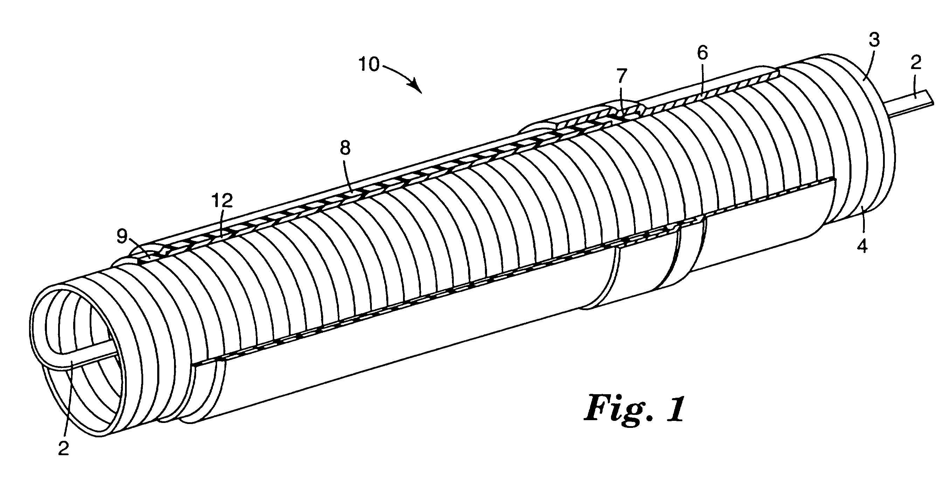

Fig. 1 shows a cable adapter 10 in accordance with the present invention. The cable adapter in accordance with the present invention is of a tubular form. In Fig. 1, a portion of the tubular cable adapter 10 has been removed in order to show the various layers of the adapter more clearly.

The cable adapter 10 includes an insulating sleeve 8 which is made from an elastic material and is held in an expanded state by a core 4. Some suitable materials for the flexible elastic sleeve 8 as used with any of the embodiments of the present invention are described in US-A-3515798. No restriction is anticipated on the chemical nature of the sleeve 8 material except that it must possess elasticity which allows it to be stretched and then shrink to substantially its original dimensions. Rubbery elastomers such as natural rubber, natural and synthetic polyisoprenes, cis-polybutadiene and styrene butadiene rubber, butadiene-acrylonitrile rubber, polychloroprene (neoprene), butyl rubber, polysulphide rubber, silicone rubber, including liquid silicone rubber such as vinyl-methyl silicone rubber, urethane rubber, polyacrylate rubber, epichlorhydrin homo- and copolymer rubbers, propylene oxide rubber, fluorosilicone rubber, fluorocarbon rubber, chloro-sulphonated polyethylene rubber, chlorinated polyethylene rubber, ethylene-propylene rubber, ethylene-propylene monomer termpolymer rubber (EPDM) nitroso rubber, or phosphonitrilic rubber may be suitable. Preferred materials are silicones and ethylene-propylene-diene monomer termpolymers (EPDM). Any of the above materials may be formulated to a variety of compositions by including flame retardant materials to improve weathering properties, materials to produce stress grading properties etc. Sleeve 8 may be produced by moulding or extrusion. It is particularly preferred if the insulating sleeve 8 is made from liquid silicone rubber as described with reference to Table 1.

The rubbery material of sleeve 8 may advantageously have the property of low permanent set. A permanent set of less than 30% is preferable.

It is preferred if elastic sleeve 8 is manufactured from an insulating material having a dielectric constant in the range 2 and 5, in particular the preferred dielectric constant is 2.3 to 2.8. The material of elastic sleeve 8 may be stress grading (dielectric constant greater than 15) provided it has good electrical insulating properties and a low loss tangent.

It is advantageous if the expansion ratio of the sleeve 8 is 3 to 1 or more, i.e. the ratio of the expanded diameter to the shrunk diameter is 3 to 1 or more.

A conformable material 12 is interposed in accordance with this embodiment between the elastic sleeve 8 and the core 4. The conformable material 12 may be in the form of a concentric layer on the inside of elastic sleeve 8 and extending over the whole length or substantially the whole length (as shown) of the elastic sleeve 8. The conformable material 12 may be a mastic as described in US-A-4378463.

It is particularly preferred if the conformable material 12 is an oil resistant material having a weight increase of less than 0.1% when exposed to Shell Diala Type "D" transformer oil (or similar) at 60 °C for 7 days.

Permeation of oils and other liquids may be determined by examination of the reflected infra-red spectra obtained by Attenuated Reflection (ATR,) methods as discussed for instance in Roempp's Chemie Lexicon, (9th edition, 1990). A sample of the conformable material 12 is placed on a horizontal germanium ATR crystal and the liquid to be tested is placed in a suitable vessel or restraint so that it is in contact with the upper surface of the conformable material 12. A beam of infra-red light is shone through the crystal so that it strikes the surface of the conformable material 12 and penetrates slightly into it. The infra-red light reflected from the surface of the conformable material 12 is influenced by the presence of any of the test liquid. Characteristic peaks in the reflected spectra indicate when the liquid has penetrated into the conformable material 12. Other liquids such as cyclotane, dodecane, and hexyl benzine may be used to assess the suitability of conformable material 12 to withstand cable oils. It is preferred if no permeation of any oil through the conformable material 12 is determined after a time period of 8 days at room temperature.

It is particularly preferred if the conformable material 12 also has a weight up-take according to DIN 53495 of less than 1% when exposed to water at room temperature for 48 hours.

The conformable material 12 in accordance with the present invention is capable of some degree of cold flow or creeping flow in use, which enables the material to act as a void filler, to fill up surface irregularities of the underlying substrate and to take up dimensional variations caused by thermal expansion and contraction of the parts to be sealed. The visco-elastic properties of a conformable material 12 may be measured by an oscillation rheometer such as the RDA II oscillation rheometer, Rheometrics Inc. Piscataway, NJ, USA. Over time periods and temperature ranges and for deformations and pressures typical encountered during shrinking of radially expanded tubings, the conformable material 12 has preferably a modulus low enough to allow viscoelastic flow for void filling. Preferably, the modulus at low frequencies between 0.016 and 1.6 Hz, oscillation amplitudes between 0.02 and 10% and temperatures between +10 and + 40 °C, is 5 Mpa or less, typically about 1 MPa. The tan δ value gives some indication of the ability of a material to deform plastically rather than elastically. As plastic deformation is advantageous in order to prevent creases forming in the conformable material 12 during collapse of the radially expanded tubing as well as for void filling and for low pressure self-amalgamation a high value of tan δ for conformable material 12 may be advantageous. Over the same frequency, oscillation amplitude and temperature ranges as above, the tan δ value is preferably greater than 0.1, more preferably greater than 0.3. The lower limit of modulus and the upper limit of tan δ may be determined by the requirement of the conformable material 12 not to ooze out from under the radially expanded tubings when installed on the removable hollow support core 4. Over the same test ranges as above, the lower limit of modulus is preferably 0.1 MPa and the upper limit of tan δ is preferably 1.

A Shore A hardness value of at least 5 is preferred, and is preferably 15. In order to prevent adhesion between the underlying core 4 and the elastic sleeve 8, it is preferable if the adhesion to stainless steel in accordance with DIN 53530 is less than 5N and is preferably zero. It is preferred if the conformable material 12 in accordance with the present invention is self-fusing or self-amalgamating.

The conformable material 12 is an insulating material preferably having a dielectric constant according to DIN 53483 in the range 5 to 12, preferably 7 to 10 at 50 Hz. This range of dielectric constant has an effect on the electric field in the joint which is intermediate that of pure insulating and stress grading materials. The conformable material 12 in accordance with the present invention provides a degree of impedance matching between the cable and joint insulation and the stress grading of the main joint, respectively. It is preferable if the dielectric breakdown strength in accordance with DIN 53481/IEC 243 is 15 kV/mm minimum, preferably in excess of 18 kV/mm. It is preferable if the volume resistivity at room temperature is 10⁹ Ωcm minimum in accordance with DIN 53482/IEC 93/167. It is preferable if the dissipation factor is less than 0.5 and preferably in the range 0.2 to 0.5 in accordance with DIN 53483 at 50 Hz. and 23 ± 2°C.

It is preferable if the conformable material 12 is not only resistant to cable oils and greases as used in paper insulated cables but is also compatible with typical polymeric cable insulation such as cross-linked polythene or EPR (ethylene propylene rubber). In particular it is preferred if the conformable material 12 is also compatible with materials used for the sleeve 8 such a s silicone rubber or EPDM rubber. It is preferred if the weight change of the conformable material when in contact with the rubber material of sleeve 8 is less than 1%, more preferably less than 0.5% when maintained at 80 °C for 7 days.

On application of the sleeve 8 to a cable, the support core 4 is removed allowing sleeve 8 to shrink back to its original dimension. The cable insulation diameter is chosen so that it is greater than or equal to the recovered dimension of the elastic sleeve 8. The conformable material 12 is formulated in such a way that the recovery force of the elastic sleeve 8 is capable of conforming the material 12 to the shape of the underlying cable insulation including conforming to, and filling up grooves or pits in the surface of the insulation and in particular filling the but gaps between paper tapes of a paper insulated cable.

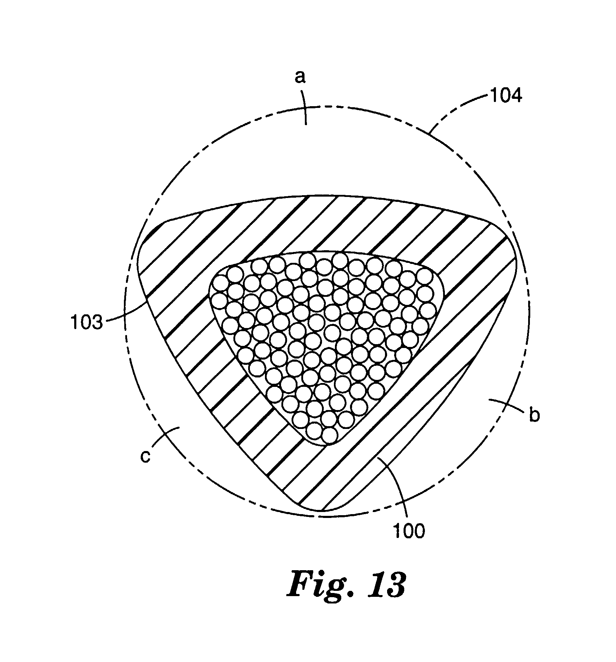

Further, it is preferable if the thickness of the conformable material 12 in the expanded state is chosen in such a way that when the elastic sleeve 8 is shrunk onto a sector-shaped core of the size range for the particular elastic sleeve 8, there is sufficient conformable material 12 to completely fill any space between the sector-shaped core and the recovered elastic sleeve 8. Figure 13 shows a schematic cross-section through a medium voltage plastic insulated sector-shaped cable core, including a stranded conductor 102 and cable insulation 100. The envelope 104 represents a theoretical circular diameter of an elastic sleeve 8 which has shrunk down onto the sector-shaped core. The thickness of the conformable material 12 may be chosen so that its area is equal to the sum of the areas A, B and C as shown in Fig. 13 for the range of sizes of sector-shaped core appropriate for the particular sleeve 8. The conformable material 12 is also chosen to have elasto-viscous properties which allow it to move from it's concentric layer construction in the expanded state as shown in Fig. 1 to the areas A, B and C as shown in Fig. 13. In actual practice the elastic sleeve 8 does not shrink to the theoretical circle 104 but approaches the shape of the sector-shaped core much more closely. Thus it is possible to use less conformable material 12 than calculated in accordance with theoretical diagram shown in Fig. 13. An amount of conformable material in the range 25 to 75% of this theoretical figure is preferred.

In order to prevent conformable material 12 from extruding out under the ends of the elastic sleeve 8 during prolonged storage at high temperatures in the radially expanded state on the core 4, it is preferred if the conformable material 12 does not extend along the complete length of the elastic sleeve 8. It is preferred if conformable material 12 is applied as a concentric layer on the inside of elastic sleeve 8 leaving two end regions 7, 9 of elastic sleeve 8 free of conformable material 12. As shown in Fig. 1 these end portions 7, 9 of sleeve 8 rest tightly on the core 4 and prevent any leakage of conformable material 12 under the ends 7, 9 of sleeve 8.

It is preferable if the conformable material 12 is based on non-crosslinked or partially cross-linked polyurethane rubber with which the above mechanical and electrical requirements can all be achieved. Inorganic fillers such as titanium dioxide and/or aluminium trihydrate may be added to the base rubber as well as extending oils.

The cable adapter 10 according to the first embodiment also includes a separate conductive elastic sleeve 6 held in a radially expanded state by a separate support core (not shown) or a conductive elastic sleeve 6 held in a radially expanded state by the support core 4 as shown in Fig. 1. It is preferred if the conductive elastic sleeve 6 is provided on the same support core as the elastic sleeve 8 but the invention is not limited thereto. If the conductive sleeve 6 is provided on the same support core 4 the installation is easier and it is not necessary to slip a separate radially expanded conductive sleeve 6 over an installed insulating sleeve 8. The installed elastic sleeve 8 would increase the diameter of the cable insulation over which the expanded conductive sleeve 6 must pass. This would provide further restrictions on the cable diameter range which could be used with any cable adapter. This is avoided with the single support core construction shown in Fig. 1.

Conductive elastic sleeve 6 may be coated on the inside with a concentric layer of a conductive sealant (not shown). When the cable adapter is used with MI or MIND cable the conductive sealant may be the conductive sealant described in US-A-4378463. It is however preferred if the formulations mentioned above with respect to the conformable material 12 including polyurethane rubber are made conductive by the substitution of the inorganic fillers with conductive particles such as carbon black.

In accordance with the first embodiment the conductive elastic sleeve 6 may be overlapped with the insulating elastic sleeve 8 as shown in Fig. 1. The length of overlap of the sleeve 6 over elastic sleeve 8 should at least be sufficient to extend beyond the end portion 7 if present. The overlap of conductive sleeve 6 should be chosen so that when used with the support core 4 of the type described, for instance, in US-A-3515798, the removal of the helical strips 2 making up the support core 4 does not result in misplacement of the conductive sleeve 6 with respect to the insulating sleeve 8 during installation.

Conductive sleeve 6 may be made from any of the materials described with respect to the insulating elastic sleeve 8 with the addition of conductive fillers in order to provide a conductivity within the range 50 to 1000, preferably 100 Ωcm. Conductive sleeve 6 may be made by conventional extrusion or moulding methods. It is particularly preferred if the basic elastomeric material used for the conductive sleeve 6 is liquid silicone, e.g. vinyl ethyl silicone rubber vulcanized at high temperature. Liquid silicone rubber also has the advantage of being resistant to the effect of cable oils and greases. The improved electrical characteristics of the vinyl-methyl-silicone mixture for this use is a discovery of the phenomenon of the silicone, which was not known or obvious prior to the making of the present invention.

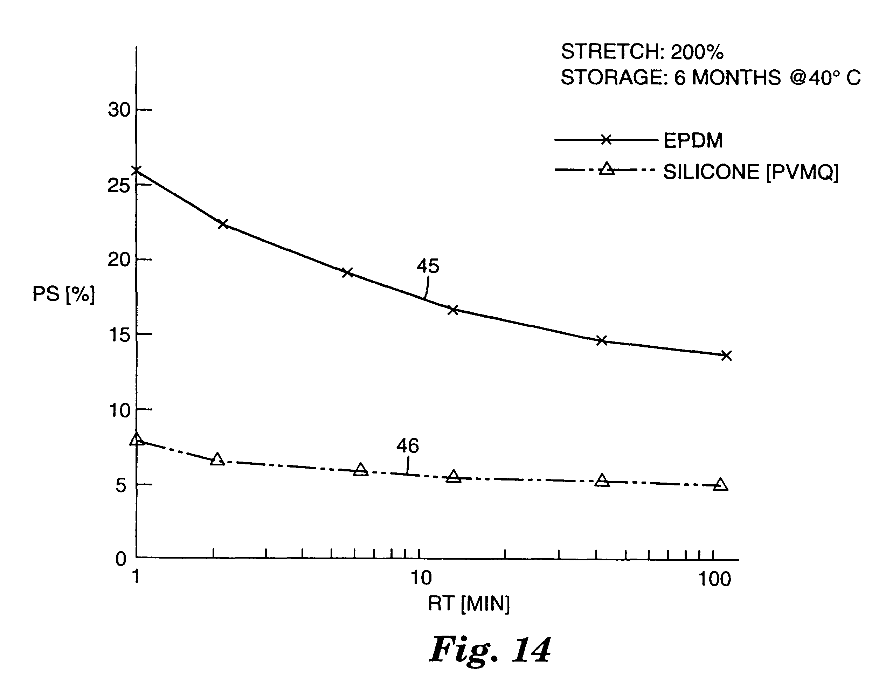

It will be appreciated that the use of silicone materials, particularly for the conductive sleeve 6, provides a product which can be used for splices on a greater variety of cable sizes efficiently. EPDM materials of known sleeves allow at best an expansion rate of 100% and the temporary residual deformation in the order of 10 to 15%. The silicone materials show no comparable permanent set or temporary residual deformation as illustrated in Fig. 14, 15 and 16. Thus, the cable adapter 10 may be expanded to in excess of 300% and stored in this stretched state without loss of conductive properties when installed on a cable core. This allows use of the adapter on a wide range of cable sizes.

The conductive material of the conductive sleeve 6 comprises strongly structurized dust fine particles of a weakly conductive, electrically polarizable material in a mass content of up to about 350 g per kg base material. Preferably, the conductive material is carbon black. Conductance increases with increasing concentrations of carbon black. The amount of carbon black needed to achieve the desired conductance depends on the size and shape of the conductive filler. The nature of the resulting conductance of the recovered silicone may be due to a discovered phenomenological result. It may consist of an ohmic response from the particulate and superposition, or the resultant influence of a potential developed or resulting across the material, in this instance, a potential of 100 to 500 volts. The presence of the silicon atoms surrounding or between the carbon particles affords a bridge between the carbon particles in the presence of the potential such that total conductance is enhanced by the silicone material. At higher fields the conductance may consist of space charge and field emission behavior which show a non-linear voltage current characteristic and depend on the size, shape and polarizability of the filler material.

The preferred embodiment is one which allows the maximum elongation and maintains conductance in the desired range.

Essentially two approaches can be taken as defined by ASTM D1418-90; a VMQ - vinyl-methyl-quaternary silicone (silicone rubber having both methyl and vinyl substituent groups on the polymer chain) or PVMQ - phenyl-vinyl-methyl-quaternary silicone (silicone rubbers having methyl, phenyl, and vinyl substituent groups on the polymer chain). The materials are best described by the electrical and physical data and suitable materials can be obtained from rubber manufacturers. Table 1 below provides the desired data.

**Table 1**

| **Test method** | **Specification** | **Conductive sleeve, typical values** | **Insulating Sleeve typical values** |
|---|---|---|---|
| Dielectric strength | VDE0303 | - | 25 kV/mm |
| Volume resistivity | VDE0303 | < 100Ω cm | 10¹⁴Ω cm |
| Relative dielectric constant | VDE0303 | - | 2.8 |
| Dissipation factor tan δ | VDE0303 | - | 0.003 |

| **Physical properties**: | | | |
|---|---|---|---|
| Tensile strength | DIN 53504 | 6.0 MPa | 9.0 MPa |
| Tear resistance | ASTM D 624 | 10.0 N/mm | 20.0 N/mm |
| Elongation at break | DIN53504 Specimen B | 500% | 750% |
| Compression set 72h/150°C | DIN53517 | 30% | 15% |
| Modulus at 100% elongation | DIN53504 | 1.9 MPa | 1.0 MPa |
| Modulus at 300% elongation | DIN53504 | 3.0 MPa | 3.0 MPa |
| Shore hardness A | DIN54504 | 45 | 30 |
| Color | | black | transparent |

Table 2 below provides an example of the typical composition for (EPDM) polyethylene or ethylene propylene diene copolymerisate materials which are common for splice covering sleeves and which is provided to show material affording a comparison to the performance of the sleeve 6 of the present invention.

**Table 2**

| **Electrode and outer screen** | **Conductive sleeve** |
|---|---|
| Ethylene-propylene-diene-terpolymer (Example Nordel 1440 sold by DuPont | 100 |
| Carbon black conductive (example Conductex 975 sold by Colombian Carbon | 70 |
| Zinc-oxide | 5 |
| Paraffinic plastiziser | 40 |
| Triallyl-cyanurate | 2 |
| 40% active dicumylperoxide | 7.5 |
| | |
| Tensile strength | 10 MPa |
| Ultimate elongation | 380% |
| Volume resistivity (ASTM D 257 | 80 Ω x cm |

Fig. 14 shows a typical comparison of the permanent set characteristics plotted against recovery time of silicone materials and the EPDM taken at room temperature at 200% stretch. The figure illustrates that the silicone (PVMQ) material, line 46 has a significantly lower permanent set rate than the EPDM material illustrated by line 45. This diagram is intended to show that the permanent set at room temperature for the silicone ranges significantly below 10 percent while for the expansion rate of 200 percent the corresponding set rates for the EPDM are between 15 and 25 percent. This should not only show that silicone material is significantly better than EPDM, but that also an expansion rate of 200 percent for EPDM would not be possible for the application.

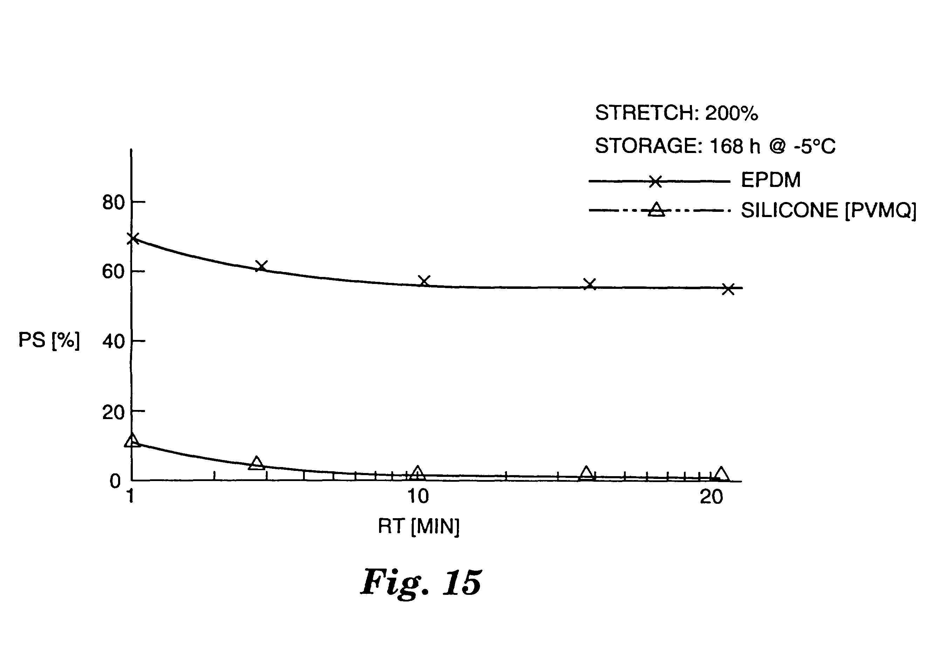

Fig. 15 illustrates the comparison of the recovery rate at the lowest possible application temperature (-5°C) where the difference between the two materials is even larger. It will be seen that for the silicone component the permanent set rates are only slightly higher compared to room temperature values, while EPDM practically does not really recover at this temperature. The silicone materials are well suited for extremely low practical application temperatures.

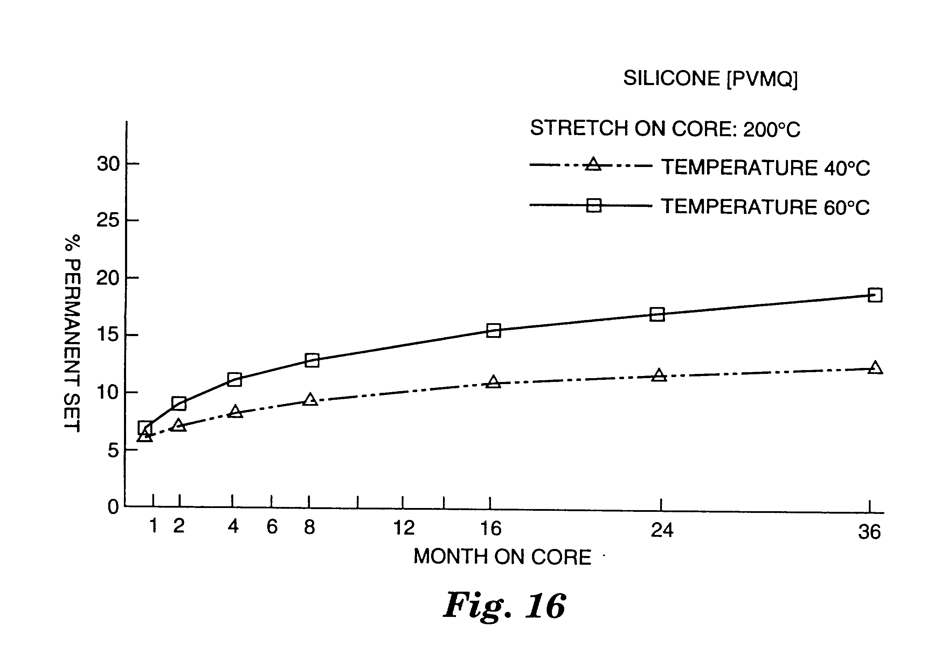

Fig. 16 shows another extreme condition. The components have been stored over long periods of time at elevated temperatures, namely 40°C and 60°C respectively which under practical conditions does not really occur. The percent permanent set figures have been taken after the system has reached its final stage which according to Figs. 14 and 15 typically is obtained after 20 minutes. It is demonstrated that even with a storage at 40°C over a very long period of time the permanent set rates still would be below that at 15°C and that the situation might become critical when permanently storing the component at a temperature of 60°C. The components have been stored as indicated, but the permanent set has been determined at room temperature 20°C.

In Figs. 14 and 15, due to the extreme behavior of the EPDM, different scales have been used for both the permanent set (PS [%]) as well as for the recovery time (RT [MIN]) and according to these scales no further settlement can be depicted after about 20 minutes.

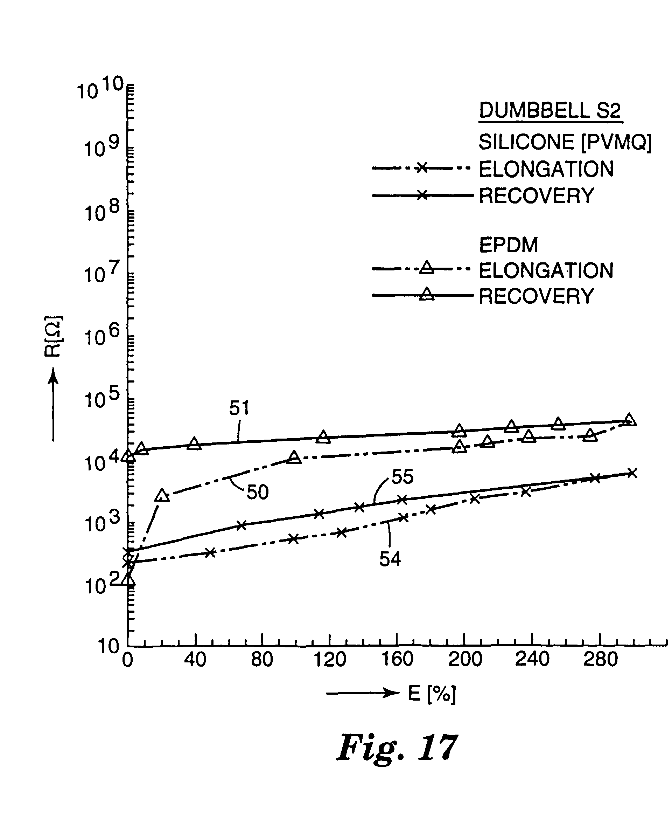

Fig. 17 graphically shows the increased performance of the silicone material (PVMQ). It is shown that the silicone (PVMQ) material practically recovers to its initial electrical characteristics after even an expansion of 300% while a dramatic reduction occurs for the same type of expansion with EPDM materials. The fact that EPDM materials are not normally stretched to this extent is known but it is possible with the silicone material. If it were to be attempted with EPDM, the resulting electrical properties of the sleeve may not be suitable for its application in a splice. As illustrated, as the EPDM material is stretched, dot-dot-dash line 50, the resistance increases, and upon recovery, as illustrated by the solid line 51, the resistance remains at an elevated condition, or more insulative by a factor of about 100. By comparison, the resistance of the silicone material (PVMQ) increases upon stretching the material, see the dot-dot-dash line 54, but when it recovers, the resistance value is substantially the same, only slightly higher, as shown by line 55. The resistance does not vary more than a factor of about 2. The comparison was made by forming dumbbell shaped pieces of the materials and using a tensile testing machine, with electrically insulated clamps, and an ohmmeter. The specimen is clamped into the tensile tester and an appropriate ohmmeter is connected to the clamps. Good electrical contact must be provided between the clamps, which act as electrodes, and the samples or specimen. A voltage of 500 volts was applied across each of the samples. Then a hysteresis test is run on the tensile tester and the resistance of the specimen is read at discrete points of elongation, during the loading and during the unloading part of the cycle. The speed is chosen to 25.4 mm/minute. At the end of the cycle an additional measurement is taken after one minute of recovery time. The dumbbell shape of the specimens are made in accordance with DIN 53 504, which corresponds to No. 2, ISO 37.

The improved electrical characteristics of the vinyl-methyl silicone mixture for this use is a discovery of the phenomenon of the silicon, which was not known or obvious prior to the making of the present invention.

Having described the invention with respect to the first embodiment, it will be appreciated that the use of silicone materials provides a product which can be used for splices on a greater variety of the cable sizes efficiently. Further, the EPDM materials of known sleeves allow at best an expansion rate of 100% and the temporary residual deformation in the order of 10 to 15%. The silicone materials show no comparable permanent set or temporary residual deformation and fast recovery as illustrated in Figs. 14, 15 and 16. Thus, the cable adapter 10 may be expanded to in excess of 300% and stored in this stretched state without loss of conductive properties when installed on a cable core. This allows use of the adapter on a wide range of cable sizes.

The removable core 4 may be of the solid tubular design mentioned in the ETZ reference above. It is preferable if the outer surface of the core 4 does not bond to the elastic sleeves 6 and 8 and the conformable material 12. For this purpose, the outer surface of core may be treated with a release or slip agent. If is preferable if the outer surface of the core 4 is relatively smooth.

Removable core 4 maintains the pre-stretched sleeves 8 and 6 in a regular expanded state and is also generally cylindrical and slightly longer than the pre-stretched sleeves 6 and 8. The diameter of the removable core 4 may vary widely, the only practical requirement being that its inner diameter is larger than the outer diameter of the cable being jointed. Removable core 4 may be constructed of any durable, flexible material, such as cellulose acetate butyrate, polypropylene, polyethylene or polyvinyl chloride. The core 4 may also be the support core as discussed in US Patent Number 3515798 which has a helical groove formed by continuous strip, adjacent coils being interconnected. It is preferred if the groove is formed on the inner side of the support core 4 leaving the outer surface smooth and continuous. Core 4 may be collapsed by firmly pulling and unwinding the free end 2 of the helical strip. The wall-thickness of core 4 may be typically in the range of 1 to 5 mm. Two or more separate cores may be provided to support elastic sleeves 6 and 8 as described in EP-A-0541000, in which case there will be two separate strips and two free ends 2 to be pulled.

The support core 4 may be similar to the support core described in US-A-4389440 whereby the helical turns of the support core are compressed closely together so that the turn junctions 4 of Fig. 1 are sufficiently narrow that conformable material 12 is not extruded through them. It is particularly preferred if the turns of the support core 4 may be interlocked together by matching protrusions/recessions on their abutting surfaces as disclosed in US- 3,808,352, WO 8300779 or EP- 0 619 636. Alternatively, the core may be as described in EP-A-0547667 produced by cutting a helical incision into a tubular element. The incision has a thickness of less than 0.1 mm at the mouth of the incision on the surface of the support core. Alternatively, the incision may be made from the inner side of the support tube so that the outer surface of the support core 4 is completely smooth and continuous. It is particularly preferred if the support core 4 is polyethylene or polypropylene.

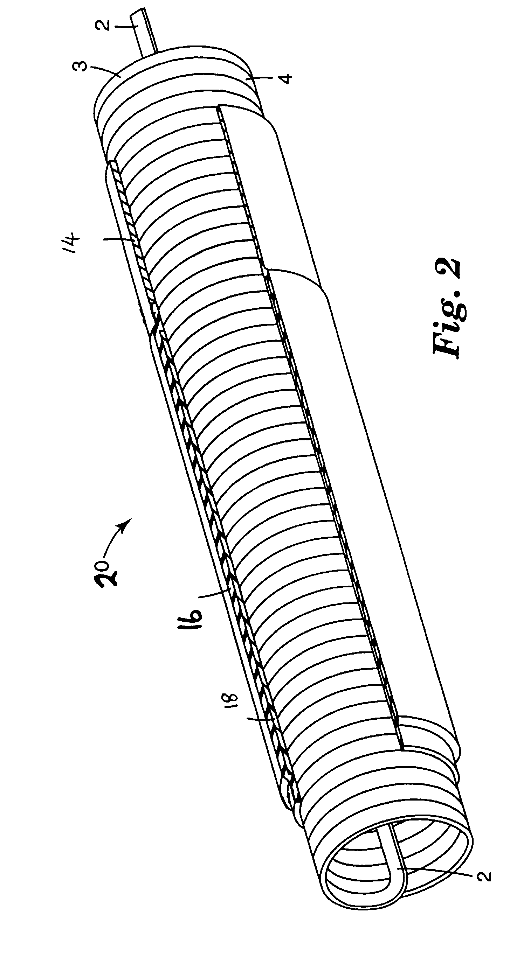

A cable adapter 20 in accordance with a second embodiment of the present invention will be described with respect to Fig. 2. The materials used for the elastic sleeve 8, the conductive sleeve 6, the conformable material 12, and the materials and construction of the support core 4 as described for the first embodiment may be used in the second embodiment for the conductive portion 14, insulation portion 16, conformable material 18, and the support core 4 of the second embodiment, respectively.

In accordance with the second embodiment of the present invention, the separate conductive sleeve 6 and insulating sleeve 8 of the first embodiment are integrated into a single tubular component having a conductive portion 14 and an insulation portion 16. The conformable material 18 may be applied over a substantial length or the whole length of the insulation portion 16. A conductive sealant may be interposed between the conductive portion 14 and the core 4 (not shown) as described with respect to the separate conductive sleeve 6 of the first embodiment. The integral conductive/insulating sleeve 14/16 may be manufactured in accordance with the step-wise moulding procedure described in DE-A-3943296. It is particularly preferred if the basic elastomeric material used to manufacture the combined conductive and insulating sleeve 14, 16 is liquid silicon rubber, for example vinyl-methyl silicone as described for the first embodiment.

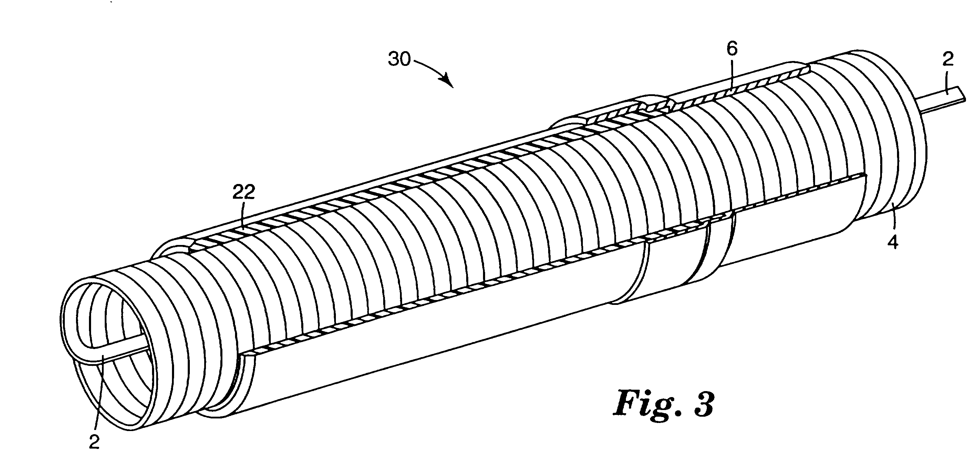

A cable adapter 30 in accordance with a third embodiment of the present invention is shown schematically in Fig. 3. The same materials as described for conductive sleeve 6 and support core 4 may be used for the conductive sleeve 6 and the support core 4 of the third embodiment, respectively.

In accordance with the third embodiment the insulating elastic sleeve and conformable material are replaced by a single sleeve 22 which is made from an elastomeric material which is both elastic and conformable. Suitable materials for the elastic conformable sleeve 22 are partially- cross-linked polyurethane rubbers such as used in 4600 GSS Gel Sealant Strip made by Minnesota Mining and Manufacturing Company, St. Paul, USA.

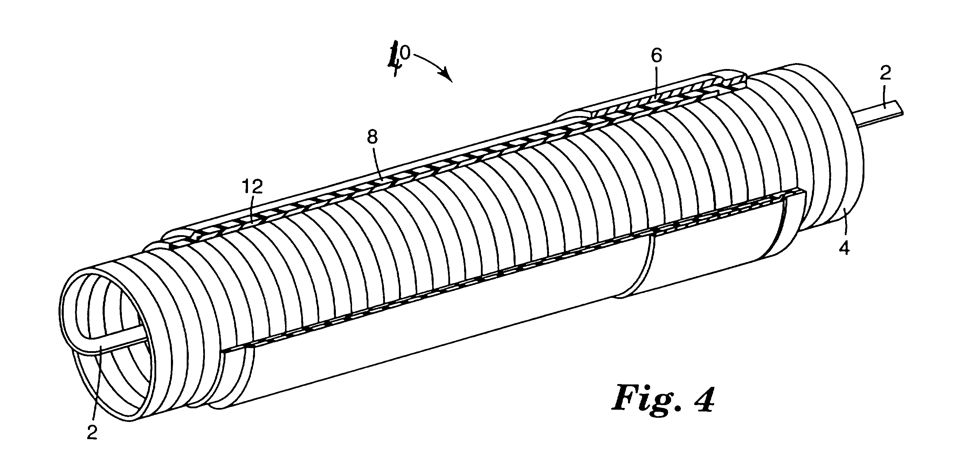

An adapter according to the fourth embodiment of the invention is shown in Fig. 4. In this embodiment the elastic sleeve 8 or 22 according to the first and third embodiments may be used for the insulating elastic sleeve 8 of the third embodiment. The conductive sleeve 6 overlaps the insulating sleeve 8 and is coterminous with sleeve 8 at one end. The materials used for the conformable material 12, 22, for the core 4 and for the conductive sleeve 6 of the first to third embodiments may be used for the fourth embodiment.

The cable adapter 10, 20, 30, 40 in accordance with the present invention may be used with conventional jointing devices normally used for plastic-to-plastic cable joints. The recovery force of the conductive sleeve 6 in conjunction with a conductive sealant, if present, onto the paper cable side of a transition joint is sufficient to seal against oil ingress into the joint from the paper cable side and water ingress into the paper cable from the joint. Once the paper cable insulation has been sealed and protected, using the cable adapter 10, 20, 30, 40, a conventional plastic-plastic straight joint may be applied to complete the joint. It is particularly preferred if a pre-stretched integral jointing device 41 in accordance with EP-A-435569 is used to complete the joint.

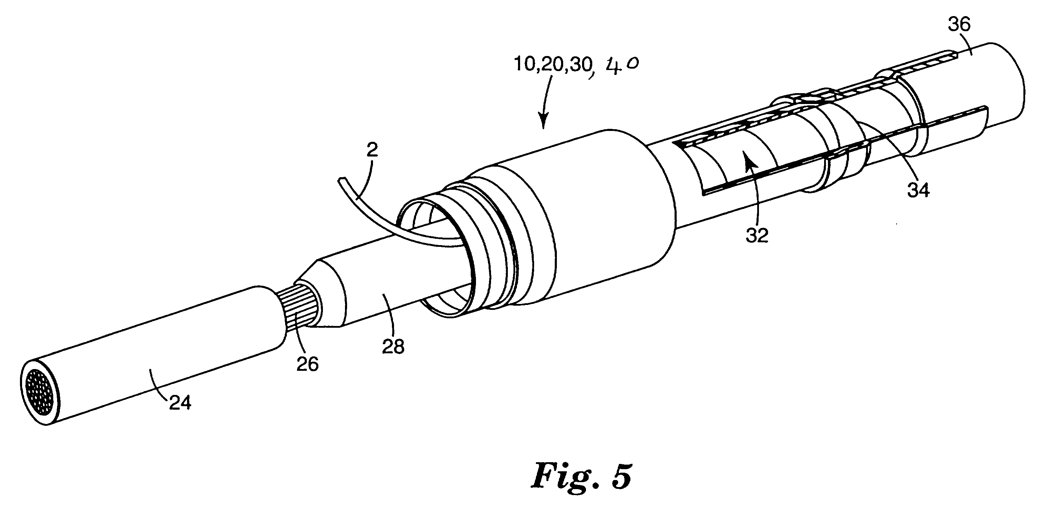

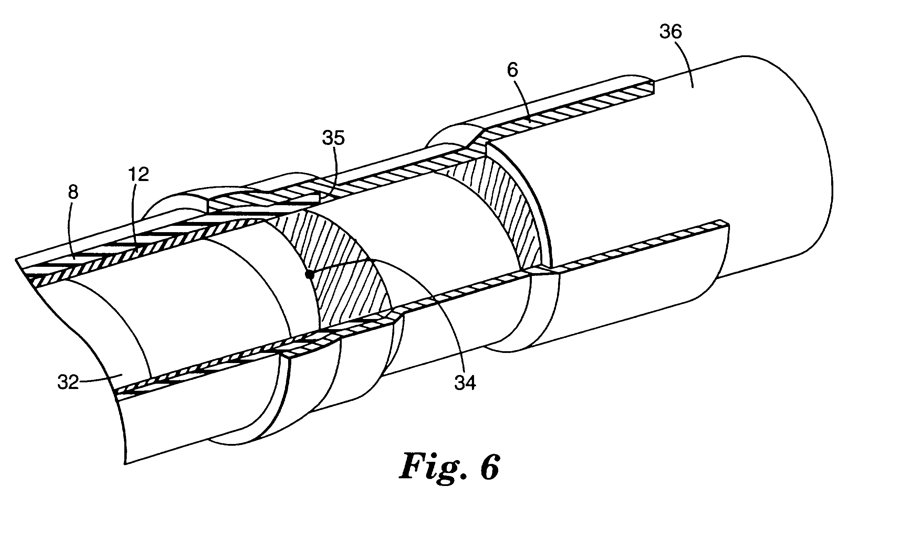

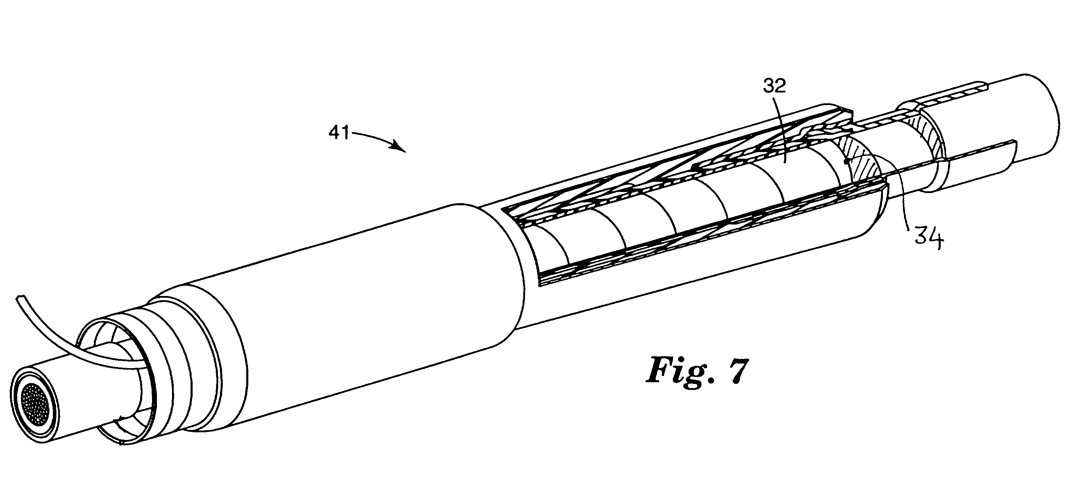

The installation of the cable adapter according to the present invention to make a transition joint between paper and plastic insulated cable will be described with reference to Figs. 5 to 8. If the paper cable is a single core cable, the lead sheath 36 is removed for a certain distance, exposing the electrostatic core screen 34. This screen is then terminated at some distance in front of the sheath cut which may be of the order of 15 to 30 mm. Removal of the core screen 34 exposes the paper insulation 32. If a transition joint is to be made to plastic insulated cables, the plastic cable is now prepared in a conventional manner exposing a portion of the core screen and insulation 24. Portions of the paper insulation and plastic insulation are now removed to expose the conductor 26. An integral jointing device 41 and a cable adapter 10, 20, 30, 40 in accordance with the invention are now slipped over one of the cables with the cable adapter 10, 20, 30, 40 on the side of the joint towards the paper cable with the conductive sleeve 6 or portion 14 being directed towards the paper cable side. The conductors 26 are now jointed by conventional means. The cable adapter 10, 20, 30, 40 is now positioned so that the conductive sleeve 6 of portion 14 overlaps the lead sheath and extends farther towards the center of the joint so that it overlaps and extends beyond the end of the electrostatic core screen 34 of the paper insulated cable. The cable adapter 10, 20, 30, 40 is now shrunk down on to the cable by removing the support core 4, e.g. by pulling on the free end 2 of the helical strip. When the cable adapter 10, 20, 30, 40 is installed onto the paper cable, the position of the conductive sleeve 6 (or connecting portion 14) may be as shown in Fig. 6. The end of the conductive sleeve 6 towards the center of the joint overlaps the end of the core screen 34 by distance which may be of the order of 10 to 40 mm. The end of the insulating sleeve 8 or insulating portion 22 which is away from the center of the joint is located above the core screen 34 so that any void 35 which may occur between the end of the insulating sleeve 8 or 22 lies in an electrically stress free region. The electrically conductive sleeve 6 or electrically conducting portion 14 overlaps the lead sheath 36 to a sufficient degree as to seal against cable oil or cable grease escaping from the paper insulated cable. To complete the insulation of the joint an integral jointing device 41 is centralized over the joint and shrunk down by removing the removable support core as described, for instance, in DE-A-3943296.

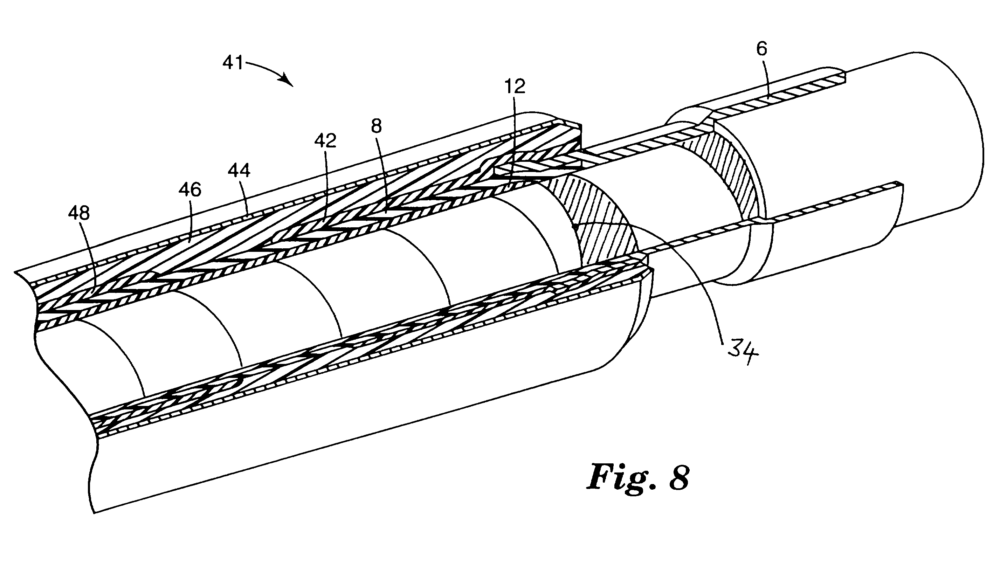

A detail of the insulated core of the paper insulated cable is shown in Fig. 8. The outer part of the joint is enclosed in a outer conductive layer 44 which may be connected to the screen and earthing system of the plastic cable and to the conductive sleeve 6 or conductive portion 14 and the lead sheath on the paper insulated cable side by means of conventional copper mash or similar. The joint is insulated by the joint insulation 46. The ends of the conductive sleeve 6 or conductive portion 14 are in contact with the stress control layer 42 of the integral joint 41, said stress control layer 42 extending from the end of the integral joint 41 towards the center of the joint. The stresses around the connector of the conductor 26 is controlled by the conductive middle layer 48 of the integral joint 41.

The joint is completed by constructing a joint case with earth continuity in accordance with conventional methods.

The embodiments of the present invention which have an overlapping conductive sleeve 6 may be installed, as an alternative (not shown), with the elastic insulating sleeve 8 overlapping the lead sheath 36. The overlap of the conductive sleeve 6 must then be sufficient so that it extends towards the middle of the joint beyond the end of the screen cut 34. Preferably, the adapter according to the fourth embodiment is installed in this way.

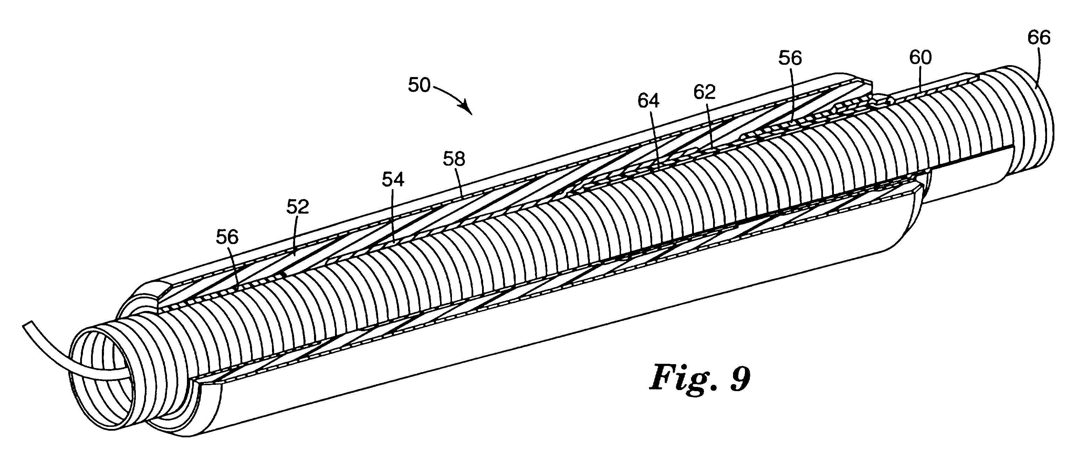

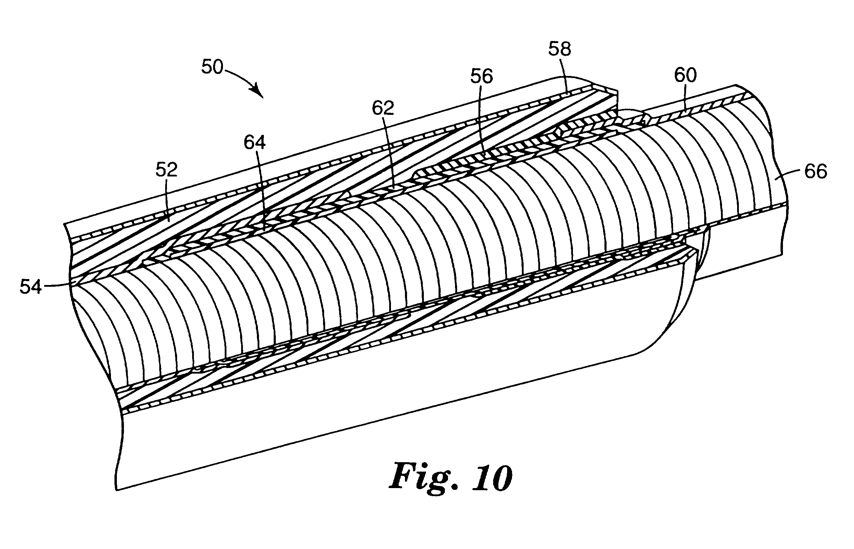

A fifth embodiment of the present invention will be described with respect to Figs. 9 and 10. The principle behind the fifth embodiment of the invention is to combine the cable adapter 10, 20, 30, 40 of anyone of the first to fourth embodiments with an integral joint similar to the integral jointing device 41 described with respect to Figs. 5 to 8 and disclosed in EP-A-0435569 and/or DE-A-3943296. The combined joint insulation and cable adapter may be moulded by the step-wise moulding procedure described in EP-A-0435569 and/or DE-A-3943296. The integral jointing component consists of an insulating layer 52, a middle or conductive layer 54, inner stress control layers 56 and an outer conductive layer 58 which extends over the complete length of the integral joint insulation part. Moulded into one end of this integral jointing device is a conductive sleeve 60 and an insulating sleeve 62 whereby the conductive sleeve 60 extends beyond the end of the integral jointing device for a sufficient distance so that in a transition joint the conductive sleeve 60 may shrink down and seal on to the lead sheath of a paper insulated cable. The insulating sleeve 62 may also extend slightly beyond the end of the integral jointing device and extends in towards the center of the joint so that the middle conductive layer 54 overlaps the insulating sleeve 62. On the inside of the insulating sleeve 62, over a substantial portion of its length or over the whole length, a conformable layer 64 is provided. A detail of the combined integral jointing device and cable adapter is shown in Fig. 10.

The fifth embodiment of the present invention is described with respect to a cable adapter integrated with the integral jointing device whereby the cable adapter is in accordance with the first embodiment of the present invention. The invention is however not limited thereto. The cable adapters 20, 30, 40 of the second to fourth embodiments may be moulded into an integral jointing device by the step-wise jointing methods described in EP-A-0435569.

The combined integral jointing device and cable adapter 50 of the fifth embodiment is installed on the cable in a similar way as described with respect to Figs. 5 to 8 except that the withdrawal of the single removable core 56 installs both the cable adapter and the integral jointing device in a single operation which reduces the jointing time.

The first to fifth embodiments of the present invention have been described in general with respect to a transition joint. The first to fifth embodiment of the present invention may be adapted to provide straight joints both for plastic and paper insulated cables by providing a kit with two cable adapters 10, 20, 30, 40 alternatively with providing a single component similar to that described with respect to Figs. 9 and 10 except that there is a moulded-in cable adapter on both ends of the integral jointing device. It will be appreciated by a person skilled in the art that a single kit may be used to form straight joints on plastic and paper cables and also transition joints between these cables thus creating a form of universal jointing kit independent of the cable type.

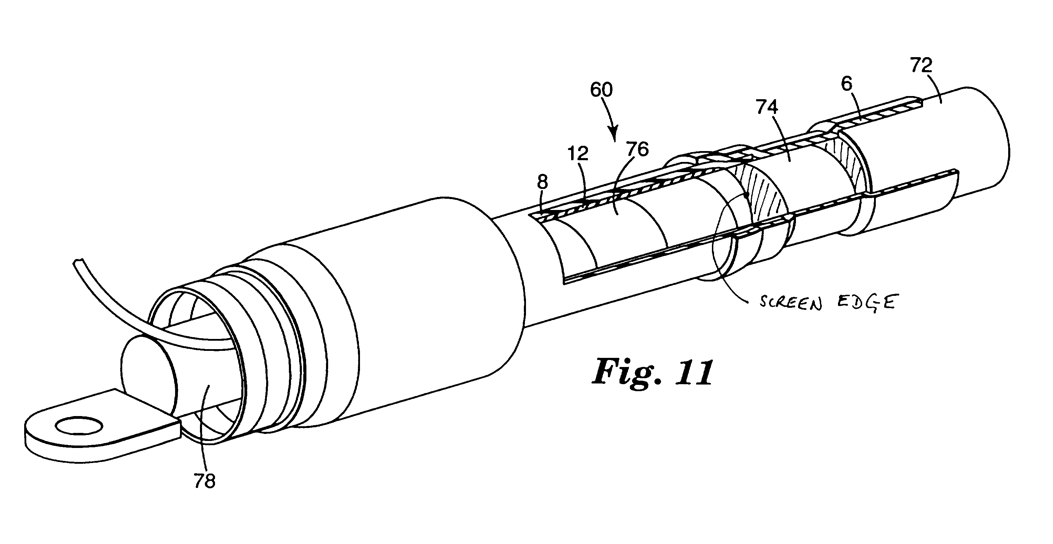

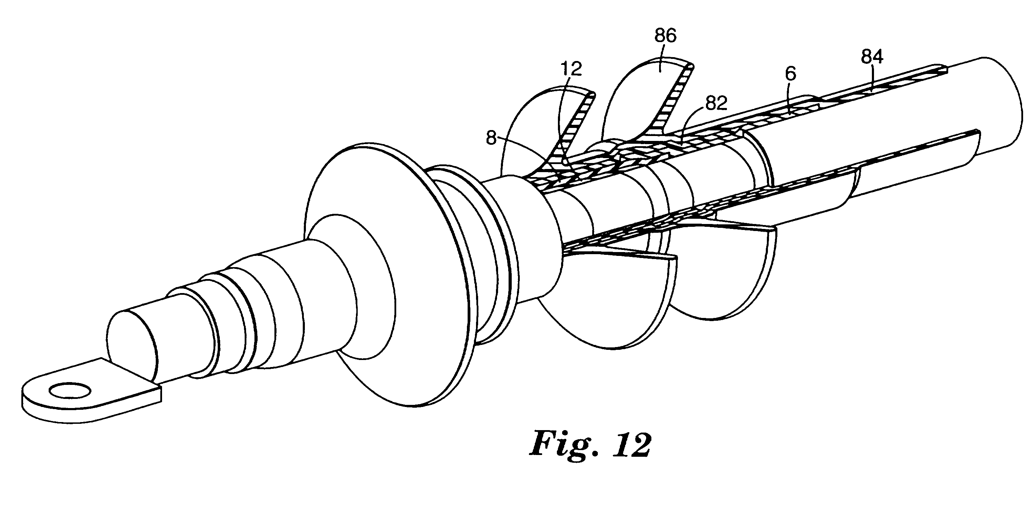

The embodiments one to four of the present invention have mainly been described with respect to jointing two cables. The cable adapters 10, 20, 30 of the present invention may be used to terminate medium voltage cables as best shown in Figs. 11 and 12.

The use of the cable adapters 10, 20, 30 in a termination will be described with respect to a paper insulated cable termination and, in particular, to the use of the cable adapter 10 in accordance with the first embodiment of the present invention. The invention is however not limited thereto. The cable adapters 20, 30 of the second and third embodiments could be similarly used to insulate and seal a paper insulated cable as will be readily appreciated by a skilled person. Further, the cable adapters 10, 20, 30 in accordance with the first to third embodiments of the present invention may also be used with plastic insulated cable to form cable terminations.

The paper insulated cable is prepared in accordance with conventional methods by stripping back the lead sheath 72, removing the core screen 74 so that it is terminated a certain distance in front of the lead sheath which may be 10 to 40 mm., removing a portion of the paper insulation so as to expose the conductor for a certain distance at the end of the cable and attaching a cable lug 78 by conventional means. The cable adapter 10 in accordance with the first embodiment is then slipped over the cable and shrunk down so that the end with the conductive sleeve 6 or conductive portion 14 is remote from the cable lug and overlaps the lead sheath thus sealing the paper insulated cable against oil or grease extruding out of the paper insulated cable or water ingress. The cable adapter 10 is shrunk down so that the conductive sleeve 6 overlaps and extends beyond the end of the core screen 74. The dimensions of the termination for stripping the paper insulated cable are chosen so that the insulating sleeve 8 and conformable material 12 extend along the paper insulation from the end of the core screen 74 onto the cable lug 78, thus sealing the paper insulated cable and providing a void free interface between the paper insulation 76 and the insulating sleeve 8. It will be appreciated that after installation of the cable adapter 10 in accordance with the first embodiment of the present invention the paper insulated cable has been sealed and has been transformed into a kind of plastic insulated cable with an outer smooth plastic insulation and a plastic conductive outer electrostatic screen. This converted paper insulated cable end may now be terminated with any form of conventional cable termination for instance a cable termination in accordance with Figs. 5 or 6 of EP-A-0424090 or a termination in accordance with US-A-3808352 or for instance the QTII indoor or outdoor terminations as supplied by Minnesota Mining and Manufacturing Company of St. Paul, Minnesota, USA Such a completed termination may appear as in Fig. 12 in which the same reference numerals have been used for the cable adapter as for the cable adapter 10 of the first embodiment of the present invention and layer 82 is a stress control layer which overlaps and extends beyond the end of the conductive sleeve 6, and layer 84 is a non-tracking and optionally weathering outer sleeve with one or more optional skirts 86.

As will be readily appreciated by the skilled person, the cable adapter 10, 20, 30, 40 according to the present invention may be used to prepare paper or plastic insulated cable before fitting an elbow termination such as described in DE-3633884, or similar.

The cable adapter 10, 20, 30, 40 of the present invention has mainly been described with reference to installation of joints and terminations on single lead-sheathed cable. The invention is not limited thereto. 3-core screened and belted cable may also be used with the cable adapter 10, 20, 30, 40 of the present invention by converting the 3-core cable into three screened and sealed cores in accordance with conventional techniques. The individual screeining/sealing sleeving on each core is then equivalent to the lead sheath referred to in this application.

In Figs. 1 to 4 the pull tab or free end of the removable core 4 is shown adjacent to the conductive sleeve 6, whereas in Figs. 5 to 11, the pull tab is shown at the other end of elastic sleeve 8. Both positions of the pull tab may be used, however, for terminations the pull tab position shown in Figs. 1 to 5 is preferred and for joints the pull tab position in Figs. 5 to 11 is preferred.

## Claims

1. A tubular cable adapter (10) for use in jointing and/or terminating medium voltage cables, comprising a first elastic insulating tubular member (8), said first elastic insulating tubular member (8) having a substantially smooth outer surface;
a second elastic conductive tubular member (6), and tubular support core means (4) for maintaining the first and second tubular members (6, 8) in a radially expanded state, said tubular core means (4) being removable from said first and second tubular members (6, 8), wherein said first tubular member (8) comprises an outer layer having an outer surface extending substantially parallel to said tubular core means (4), characterized in that said first tubular member (8) further comprises an insulating conformable material (12) interposed between said outer layer and said hollow tubular core means (4).

2. Cable adapter according to claim 1, wherein said conformable material (12) is a viscoelastic, self-fusing or self-amalgamating conformable layer extending concentrically and substantially over the whole length of said first tubular member (8).

3. Cable adapter according to claim 1 or 2, wherein a concentric layer of conductive sealant is interposed between said second tubular member (6) and said tubular core means (4).

4. Cable adapter according to any of claims 1 to 3, wherein said second tubular member (6) overlays said first tubular member (8).

5. Cable adapter according to any of claims 1 to 4, wherein said conformable material (12) has a modulus of at most 5 Mpa as measured on an oscillation rheometer in the ranges, 10 to 40 °C, oscillation amplitudes between 0.02 % and 10 % and frequency of oscillation between 0.016 and 1.6 Hz.

6. Cable adapter according to any of claims 1 to 5, wherein the expansion ratio of said first and second tubular members (6, 8) is at least 3:1.

7. Cable adapter according to claims 5 or 6, wherein the permanent set of said first and second tubular members (6, 8) is less than 30 %.

8. Cable adapter according to any of claims 5 to 7, wherein the electrical conductivity of said conductive tubular member (6) after recovery is substantially the same as before expansion.

9. Cable adapter according to any of the preceding claims, wherein the conformable material (12) is based on polyurethane rubber.

10. Cable adapter according to any of the preceding claims, wherein said first tubular and/or said second tubular member (6, 8) is made of vinyl-methyl silicone rubber vulcanized at high temperature.

11. A tubular cable adapter (10) for use in jointing and/or terminating medium voltage cables, comprising a first insulating tubular member (8) having a substantially smooth outer surface;
a second elastic conductive tubular member (6), and tubular support core means (4) for maintaining the first and second tubular members (6, 8) in a radially expanded state, said tubular core means (4) being removable from said first and second tubular members (6, 8), wherein said first tubular member (8) has an outer surface extending substantially parallel to said hollow tubular core means (4) characterized in that said first tubular member (8) comprises an insulating, elastic and conformable material.

12. Cable adapter (10) according to claim 11, wherein said insulating, elastic and conformable material (12) is a partially cross-linked polyurethane rubber.

13. A jointing device for use in jointing medium voltage cables comprising a cable adapter (10) according to any of claims 1 to 12 moulded into a moulded joint sleeve comprising elastomeric insulating material and an outer conductive layer.

14. A kit for use in making a straight joint between two electric cables, each cable having either plastic or paper insulated conductors, comprising at least one cable adapter (10) according to any of claims 1 to 12 and a moulded joint sleeve comprising elastomeric insulating material and an outer conductive layer.

15. A straight joint between two electric cables, each cable having either plastic or paper insulated conductors comprising: at least one cable adapter (10) according to any of claims 1 to 12 and a moulded joint sleeve comprising elastomeric insulating material and an outer conductive layer.

16. Method for jointing or terminating a medium voltage cable including the step of installing an adapter (10) in accordance with any of the claims 1 to 12 to prepare the ends of said cable.

17. Method according to claim 16, wherein the cable insulation surface is irregularly shaped or uneven.

## Patentansprüche

1. Rohrförmiger Kabeladapter (10) zur Verwendung beim Verbinden und/oder Anschließen von Mittelspannungskabeln, der folgendes umfaßt: ein erstes elastisches isolierendes rohrförmiges Glied (8), wobei das erste elastische isolierende rohrförmige Glied (8) eine im wesentlichen glatte Außenfläche aufweist;
ein zweites elastisches leitendes rohrförmiges Glied (6) und ein rohrförmiges Stützkernmittel (4), um das erste und zweite rohrförmige Glied (6, 8) in einem radial expandierten Zustand zu halten, wobei das rohrförmige Kernmittel (4) aus dem ersten und zweiten rohrförmigen Glied (6, 8) entfernt werden kann, wobei das erste rohrförmige Glied (8) eine Außenschicht mit einer Außenfläche, die im wesentlichen parallel zu dem rohrförmigen Kernmittel (4) verläuft, umfaßt, dadurch gekennzeichnet, daß das erste rohrförmige Glied (8) weiterhin aus einem zwischen der Außenschicht und dem hohlen rohrförmigen Kernmittel (4) angeordneten isolierenden anpaßbaren Material (12) besteht.

2. Kabeladapter nach Anspruch 1, bei dem das anpaßbare Material (12) eine viskoelastische, selbstverschweißende oder selbst-amalgamierende anpaßbare Schicht ist, die konzentrisch und im wesentlichen über die ganze Länge des ersten rohrförmigen Glied (8) verläuft.

3. Kabeladapter nach Anspruch 1 oder 2, bei dem zwischen dem zweiten rohrförmigen Glied (6) und dem rohrförmigen Kernmittel (4) eine konzentrische Schicht aus leitendem Dichtungsmaterial angeordnet ist.

4. Kabeladapter nach einem der Ansprüche 1 bis 3, bei dem das zweite rohrförmige Glied (6) über dem ersten rohrförmigen Glied (8) liegt.

5. Kabeladapter nach einem der Ansprüche 1 bis 4, bei dem das anpaßbare Material (12) nach Messung auf einem Oszillationsrheometer in den Bereichen 10 bis 40°C bei, Oszillationsamplituden zwischen 0,02% und 10% und einer Oszillationsfrequenz zwischen 0,016 und 1,6 Hz ein Modul von höchstens 5 MPa aufweist.

6. Kabeladapter nach einem der Ansprüche 1 bis 5, bei dem das Expansionsverhältnis des ersten und zweiten rohrförmigen Glieds (6, 8) mindestens 3:1 beträgt.

7. Kabeladapter nach Ansprüchen 5 oder 6, bei dem die bleibende Verformung des ersten und zweiten rohrförmigen Glieds (6, 8) unter 30% liegt.

8. Kabeladapter nach einem der Ansprüche 5 bis 7, bei dem die elektrische Leitfähigkeit des leitenden rohrförmigen Glieds (6) nach der Regeneration im wesentlichen die gleiche wie vor der Expansion ist.

9. Kabeladapter nach einem der vorhergehenden Ansprüche, bei dem das anpaßbare Material (12) auf Polyurethankautschuk basiert.

10. Kabeladapter nach einem der vorhergehenden Ansprüche, bei dem das erste rohrförmige und/oder das zweite rohrförmige Glied (6, 8) aus bei hoher Temperatur vulkanisiertem Vinylmethylsilikonkautschuk hergestellt ist.

11. Rohrförmiger Kabeladapter (10) zur Verwendung beim Verbinden und/oder Anschließen von Mittelspannungskabeln, der folgendes umfaßt: ein erstes isolierendes rohrförmiges Glied (8) mit einer im wesentlichen glatten Außenfläche;
ein zweites elastisches leitendes rohrförmiges Glied (6) und ein rohrförmiges Stützkernmittel (4), um das erste und zweite rohrförmige Glied (6, 8) in einem radial expandierten Zustand zu halten, wobei das rohrförmige Kernmittel (4) aus dem ersten und zweiten rohrförmigen Glied (6, 8) entfernt werden kann, wobei das erste rohrförmige Glied (8) eine Außenfläche, die im wesentlichen parallel zu dem hohlen rohrförmigen Kernmittel (4) verläuft, aufweist, dadurch gekennzeichnet, daß das erste rohrförmige Glied (8) aus einem isolierenden, elastischen und anpaßbaren Material besteht.

12. Kabeladapter nach Anspruch 11, bei dem das isolierende, elastische und anpaßbare Material (12) ein teilweise vernetzter Polyurethankautschuk ist.

13. Verbindungseinrichtung zur Verwendung beim Verbinden von Mittelspannungskabeln, die einen Kabeladapter (10) nach einem der Ansprüche 1 bis 12, der in eine geformte Verbindungshülse aus elastomerem isolierendem Material eingeformt ist, und eine leitende Außenschicht umfaßt.

14. Ausrüstung zur Verwendung bei der Herstellung einer geraden Verbindung zwischen zwei Elektrokabeln, wobei jedes Kabel entweder mit Kunststoff .oder Papier isolierte Leiter aufweist, umfassend mindestens einen Kabeladapter (10) nach einem der Ansprüche 1 bis 12 und eine geformte Verbindungshülse aus elastomerem isolierendem Material und eine leitende Außenschicht.

15. Gerade Verbindung zwischen zwei Elektrokabeln, wobei jedes Kabel entweder mit Kunststoff oder Papier isolierte Leiter aufweist, umfassend mindestens einen Kabeladapter (10) nach einem der Ansprüche 1 bis 12 und eine geformte Verbindungshülse aus elastomerem isolierendem Material und eine leitende Außenschicht.

16. Verfahren zum Verbinden oder Anschließen eines Mittelspannungskabels, einschließlich dem Schritt der Montage eines Adapters (10) nach einem der Ansprüche 1 bis 12, um die Enden des Kabels zu konfektionieren.

17. Verfahren nach Anspruch 16, bei dem die Kabelisolierfläche unregelmäßig geformt bzw. ungleichmäßig ist.

## Revendications

1. Adaptateur tubulaire (10) pour câbles, destiné à être utilisé pour raccorder et/ou terminer des câbles de moyenne tension, comprenant un premier élément tubulaire isolant élastique (8), ledit premier élément tubulaire isolant élastique (8) présentant une surface extérieure essentiellement lisse;
un deuxième élément tubulaire conducteur élastique (6), et un moyen d'âme de soutien tubulaire (4) pour maintenir les premier et deuxième éléments tubulaires (6, 8) dans un état radialement dilaté, ledit moyen d'âme tubulaire (4) étant séparable desdits premier et deuxième éléments tubulaires (6, 8), dans lequel ledit premier élément tubulaire (8) comprend une couche extérieure présentant une surface extérieure se prolongeant essentiellement parallèlement audit moyen d'âme tubulaire (4), caractérisé en ce que ledit premier élément tubulaire (8) comprend en outre un matériau conformable isolant (12) interposé entre ladite couche extérieure et ledit moyen d'âme tubulaire creux (4).

2. Adaptateur pour câbles selon la revendication 1, dans lequel ledit matériau conformable (12) est une couche conformable visco-élastique, autosoudante ou auto-amalgamante se prolongeant concentriquement et essentiellement sur toute la longueur dudit premier élément tubulaire (8).

3. Adaptateur pour câbles selon la revendication 1 ou 2, dans lequel une couche concentrique de matériau d'étanchéité conducteur est interposée entre ledit deuxième élément tubulaire (6) et ledit moyen d'âme tubulaire (4) .

4. Adaptateur pour câbles selon l'une quelconque des revendications 1 à 3, dans lequel ledit deuxième élément tubulaire (6) recouvre ledit premier élément tubulaire (8).

5. Adaptateur pour câbles selon l'une quelconque des revendications 1 à 4, dans lequel ledit matériau conformable (12) a un module d'au plus 5 MPa, tel que mesuré sur un rhéomètre oscillant dans les gammes de 10 à 40°C, amplitudes des oscillations entre 0,02% et 10% et fréquence des oscillations entre 0,016 et 1,6 Hz.

6. Adaptateur pour câbles selon l'une quelconque des revendications 1 à 5, dans lequel le rapport de dilatation desdits premier et deuxième éléments tubulaires (6, 8) est d'au moins 3:1.

7. Adaptateur pour câbles selon les revendications 5 ou 6, dans lequel la déformation permanente desdits premier et deuxième éléments tubulaires (6, 8) est inférieure à 30%.

8. Adaptateur pour câbles selon l'une quelconque des revendications 5 à 7, dans lequel la conductivité électrique dudit élément tubulaire conducteur (6) après récupération est essentiellement la même qu'avant la dilatation.

9. Adaptateur pour câbles selon l'une quelconque des revendications précédentes, dans lequel le matériau conformable (12) est à base de caoutchouc polyuréthane.

10. Adaptateur pour câbles selon l'une quelconque des revendications précédentes, dans lequel ledit premier élément tubulaire et/ou ledit deuxième élément tubulaire (6, 8) est constitué de caoutchouc silicone vinyl-méthylique vulcanisé à haute température.

11. Adaptateur tubulaire (10) pour câbles, destiné à être utilisé pour raccorder et/ou terminer des câbles de moyenne tension, comprenant un premier élément tubulaire isolant (8) présentant une surface extérieure essentiellement lisse;
un deuxième élément tubulaire conducteur élastique (6), et un moyen d'âme de soutien tubulaire (4) pour maintenir les premier et deuxième éléments tubulaires (6, 8) dans un état radialement dilaté, ledit moyen d'âme tubulaire (4) étant séparable desdits premier et deuxième éléments tubulaires (6, 8), dans lequel ledit premier élément tubulaire (8) présente une surface extérieure se prolongeant essentiellement parallèlement audit moyen d'âme tubulaire creux (4), caractérisé en ce que ledit premier élément tubulaire (8) comprend un matériau isolant, élastique et conformable.

12. Adaptateur (10) pour câbles selon la revendication 11, dans lequel ledit matériau isolant, élastique et conformable (12) est un caoutchouc polyuréthane partiellement réticulé.

13. Dispositif de raccordement destiné à être utilisé pour raccorder des câbles de moyenne tension, comprenant un adaptateur (10) pour câbles selon l'une quelconque des revendications 1 à 12 moulé pour former un manchon de raccordement moulé comprenant un matériau élastomère isolant et une couche extérieure conductrice.

14. Kit destiné à être utilisé pour réaliser un raccord droit entre deux câbles électriques, chaque câble ayant des conducteurs isolés par du plastique ou bien du papier, comprenant au moins un adaptateur (10) pour câbles selon l'une quelconque des revendications 1 à 12 et un manchon de raccordement moulé comprenant un matériau élastomère isolant et une couche extérieure conductrice.

15. Raccord droit entre deux câbles électriques, chaque câble ayant des conducteurs isolés par du plastique ou bien du papier, comprenant au moins un adaptateur (10) pour câbles selon l'une quelconque des revendications 1 à 12 et un manchon de raccordement moulé comprenant un matériau élastomère isolant et une couche extérieure conductrice.

16. Procédé de raccordement ou de terminaison d'un câble de moyenne tension comportant l'étape consistant à installer un adaptateur (10) selon l'une quelconque des revendications 1 à 12 afin de préparer les extrémités dudit câble.

17. Procédé selon la revendication 16, dans lequel la surface d'isolation du câble est de forme irrégulière ou inégale.
